# EUROPÄISCHE PATENTSCHRIFT

(11) **EP 2 440 379 B1**
(45) Veröffentlichungstag und Bekanntmachung des Hinweises auf die Patenterteilung: **18.06.2014**
(21) Anmeldenummer: 10724711.6
(22) Anmeldetag: 08.06.2010
(51) Int. Cl.: B29B 7/60, B29B 7/74, B29B 7/40

(54) **VERFAHREN UND VORRICHTUNG ZUM ZUBEREITEN EINER PASTÖSEN MASSE ZUM VERSIEGELN EINER ISOLIERGLASSCHEIBE**
METHOD AND DEVICE FOR PREPARING A PASTE-LIKE COMPOUND FOR SEALING AN INSULATING GLASS PANE
PROCÉDÉ ET DISPOSITIF DE PRÉPARATION D'UNE MASSE PÂTEUSE DESTINÉE À SCELLER UN VITRAGE ISOLANT

(30) Priorität: 09.06.2009 DE 102009024939
(43) Veröffentlichungstag der Anmeldung: 18.04.2012
(73) Patentinhaber: Bystronic Lenhardt GmbH, 75242 Neuhausen-Hamberg (DE)
(72) Erfinder: SCHULER, Peter, 75233 Tiefenbronn (DE)
(74) Vertreter: Twelmeier Mommer & Partner
(86) Internationale Anmeldenummer: PCT/EP2010/003455
(87) Internationale Veröffentlichungsnummer: WO 2010/142428

(56) Entgegenhaltungen:
- DE-A1- 4 445 946
- DE-A1-102007 051 610
- US-A- 2 768 405
- US-A- 3 894 722

## Beschreibung

Die Erfindung geht von einer Vorrichtung mit den im Oberbegriff der Ansprüche 1 und 9 angegebenen Merkmalen aus. Ein solcher Stand der Technik ist aus der US 2 768 405 A bekannt. Es handelt sich um eine tragbare Vorrichtung zum Beschichten von Ecken eines Flansches von Flugzeugbenzintanks u.dgl. mit einem Zweikomponentenkleber, dessen Bestandteile unmittelbar vor dem Beschichten dynamisch miteinander gemischt werden.

Aus der DE 35 42 767 A1 und aus der DE 39 29 608 A1 ist eine Vorrichtung zum Fördern von zwei zähflüssigen Substanzen in vorgegebenem Mengenverhältnis aus zwei Vorratsbehältern zu einer Düse bekannt, mit welcher die Randfuge einer Isolierglasscheibe versiegelt wird. Die beiden zähflüssigen Substanzen, bei denen es sich um die beiden Komponenten einer Zweikomponenten-Dicht- und Klebmasse handelt, werden durch Kolbenpumpen aus Fässern jeweils in einen Zwischenspeicher gefördert, bei welchem es sich um eine Kolben-Zylinder-Einheit handelt, aus welcher ein erster Kolben die Hauptkomponente (Binder oder Basiskomponente) der Dicht- und Klebmasse und ein zweiter Kolben die Zusatzkomponente (Härter) synchron zur Hauptkomponente presst. Hauptkomponente und Zusatzkomponente werden auf dem Förderweg zwischen der Kolben-Zylinder-Einheit und der Düse durch einen statischen Mischer gefördert, in welchem sie miteinander vermischt werden.

Neigt sich der Vorrat der Hauptkomponente und der Zusatzkomponente in der Kolben-Zylinder-Einheit seinem Ende zu, muss der Versiegelungsvorgang der Isolierglasscheibe unterbrochen werden, um die Hauptkomponente und die Zusatzkomponente in die jeweilige Kolben-Zylinder-Einheit nachzufüllen. Während dieser Zeit ist eine Versiegelung von Isolierglasscheiben nicht möglich. Will man Unterbrechungen des Versiegelungsvorgangs vermeiden, muss man das Speichervolumen der Kolben-Zylinder-Einheit möglichst groß wählen. Je größer das Speichervolumen ist, desto schwieriger wird es wegen der unvermeidlichen Kompressibilität und eines thixotropen Verhaltens der Bestandteile der Dicht- und Klebmasse, diese so genau zu dosieren, dass weder zuviel noch zuwenig von der Masse in die Randfuge der Isolierglasscheibe gelangt. Der Einfluss der Kompressibilität und der thixotropen Eigenschaften der pastösen Masse ist besonders deshalb von Bedeutung, weil für das Fördern der pastösen Masse Drücke von 200 bar bis 250 bar aufgebracht werden müssen. Außerdem steigen mit zunehmendem Speichervolumen das Gewicht der Kolben-Zylinder-Einheiten, der Kraftbedarf für deren Betätigen, der Druck auf das zu fördernde Material und damit auch das Gewicht für die Antriebe der Kolben der Kolben-Zylinder-Einheiten.

Um die Förderwege von den Kolben-Zylinder-Einheiten zu den Düsen kurz zu halten, ist es bekannt, die Düse und die sie speisenden Kolben-Zylinder-Einheiten auf einem gemeinsamen Träger anzuordnen. Dieser muss beweglich sein, um die Düse am Rand der Isolierglasscheiben entlang bewegen zu können. Der Aufwand für den Bewegungsantrieb steigt ebenfalls mit dem Gewicht der Kolben-Zylinder-Einheiten.

Aus der DE 10 2007 051 610 A1 ist es bekannt, beim Versiegeln von Isolierglasscheiben einen dynamischen Mischer für das Mischen der Bestandteile der Versiegelungsmasse einzusetzen.

Der vorliegenden Erfindung liegt die Aufgabe zugrunde, einen Weg aufzuzeigen, wie der Aufwand für das Versiegeln von Isolierglasscheiben verringert und die Dosiergenauigkeit beim Versiegeln erhöht werden kann.

Diese Aufgabe wird durch ein Verfahren mit den im Patentanspruch 1 angegebenen Merkmalen und durch eine Vorrichtung mit den im Patentanspruch 22 angegebenen Merkmalen gelöst. Vorteilhafte Weiterbildungen der Erfindung sind Gegenstand der Unteransprüche.

Das erfindungsgemäße Verfahren zum Zubereiten einer aus wenigstens zwei Bestandteilen bestehenden pastösen Masse, welche nach dem Vermischen der anfänglich in getrennten Vorratsbehältern vorliegenden Bestandteile abbindet, und zum Einspritzen der abbindenden pastösen Masse in einen Zwischenraum zwischen zwei Glastafeln einer Isolierglasscheibe beginnt mit dem Fördern der wenigstens zwei Bestandteile aus den Vorratsbehältern, bei denen es sich vorzugsweise um Fässer handelt, in gesonderte Zwischenspeicher. Aus den Zwischenspeichern werden die Bestandteile durch Zahnradpumpen in einen dynamischen Mischer gefördert, in welchem sie mittels motorisch angetriebener Mischelemente miteinander vermischt werden. Die den Mischer verlassende abbindende, pastöse Masse gelangt in eine Düse, welche wenigstens eine Mündung hat, welche in den Zwischenraum zwischen den Glastafeln der Isolierglasscheibe gerichtet ist. Mittels der Düse wird die durch das Mischen gebildete, abbindende, pastöse Masse in den Zwischenraum zwischen den beiden Glastafeln gespritzt, während die Düse am Rand wenigstens einer der beiden Glastafeln entlang bewegt wird.

Die Kombination aus einem dynamischen Mischer, in welchem die Bestandteile der pastösen Masse mittels motorisch angetriebener Mischelemente miteinander vermischt werden, mit Zahnradpumpen, welche die Bestandteile dem dynamischen Mischer zuführt, und mit je einem Zwischenspeicher für die wenigstens zwei miteinander zu vermischenden Bestandteile, aus welchen die Zahnradpumpen den jeweiligen Bestandteil abziehen und dem dynamischen Mischer zuführen, haben für das Versiegeln von Isolierglasscheiben einen bedeutenden Fortschritt gebracht, einen "Quantensprung" in der Technik des Versiegelns von Isolierglasscheiben. Dieser sprunghafte Fortschritt war nicht vorherzusehen. Mit der Verwendung eines dynamischen Mischers in Kombination mit Zahnradpumpen, die ihn speisen, und mit Zwischenspeichern, aus denen die Zahnradpumpen Material beziehen, vollzieht die vorliegende Erfindung eine völlige Abkehr vom Stand der Technik. Dadurch werden viele bedeutende Vorteile erzielt:
- Der Druckverlust, welchen die pastöse Masse erleidet, wenn sie durch einen dynamischen Mischer hindurchgefördert wird, ist wesentlich kleiner als der Druckverlust, den sie in einem statischen Mischer erleidet. In einer Versiegelungsvorrichtung, welche einen statischen Mischer aufweist, müssen die Bestandteile der pastösen Masse mit einem Druck, welcher bei nicht zu kleinen Abständen zwischen den Glastafeln einer Isolierglasscheibe typisch 200 bar bis 250 bar beträgt, aus den Zwischenspeichern gepresst werden, aus welchen der statische Mischer gespeist wird. Von dem Druck von 200 bar bis 250 bar fällt der größte Teil auf dem Weg bis zur Düse ab; an der Düse kommt die pastöse Masse mit einem Druck an, der typisch nur noch 70 bar bis 80 bar beträgt, so dass der Druckverlust bis dahin ungefähr 2/3 des anfänglichen Druckes beträgt. Der Löwenanteil des Druckverlustes ist durch den statischen Mischer verursacht. Durch die Verwendung eines dynamischen Mischers kann mindestens ein großer Teil des sonst bei einem statischen Mischer auftretenden Druckverlustes vermieden werden.
- Infolge des stark verringerten Druckverlustes sinkt der Kraftbedarf für das Auspressen der pastösen Masse.
- Verringerter Ausgangsdruck und verringerter Kraftbedarf für das Auspressen der pastösen Masse erlauben es, leichtere Zwischenspeicher und leichtere Pumpen zu verwenden.
- Durch die Gewichtseinsparung lassen sich die Zwischenspeicher, die Pumpen und der Mischer leichter gemeinsam mit der Düse bewegen; der Antrieb für die gemeinsame Bewegung kann schwächer ausgelegt sein, was weiteres Gewicht spart.
- Das Bewegen leichterer Zwischenspeicher und leichterer Fördereinrichtungen erlaubt leichtere Halterungen und Führungen für diese Dinge, was ein weiteres Mal Gewicht spart.
- Mit der Verkleinerung der zu bewegenden Masse der Versiegelungsvorrichtung sinkt deren Neigung zu unerwünschten Schwingungen und wird deren Dämpfung erleichtert.
- Geringere Drücke, geringerer Kraftbedarf und geringere Massen führen zu höherer Lebensdauer, insbesondere bei den Zwischenspeichern und den Pumpen sowie bei deren Dichtungen.
- Das Fassungsvermögen des dynamischen Mischers und die Verweilzeit der pastösen Masse sind, bezogen auf gleiche Mischergebnisse, im dynamischen Mischer wesentlich kleiner als in einem statischen Mischer. Dadurch sinkt das Volumen der pastösen Masse, welches sich zwischen den Zwischenspeichern und der Düse befindet. Durch das kleinere Volumen verkleinert sich der Einfluss der Kompressibilität und der Thixotropie der pastösen Masse auf die Dosiergenauigkeit, so dass sich die Dosiergenauigkeit erhöht.
- Durch die Verringerung der Durchlaufzeit der pastösen Masse durch den Mischer verringert sich das Ausmaß des Abbindens der pastösen Masse, welches bereits auf dem Weg bis zur Düse auftritt.
- Dadurch, dass der dynamische Mischer mit einem geringeren Fassungsvermögen auskommt als ein statischer Mischer und dass die Verweildauer des Materials im dynamischen Mischer kürzer ist als im statischen Mischer, besteht keine so große Gefahr wie bei einem statischen Mischer, dass sich Material in Toträumen des Mischers festsetzt und abbindet. Zu diesem Vorteil tragen die angetriebenen Mischelemente bei, indem sie die pastöse Masse im dynamischen Mischer zwangsweise in Bewegung halten.
- In Versiegelungsvorrichtungen für Isolierglasscheiben haben statische Mischer typisch eine Länge von 80 cm bis über 1 m. Ein dynamischer Mischer mit entsprechender Leistungsfähigkeit wie ein statischer Mischer ist sehr viel kürzer und kompakter als der statische Mischer. Dadurch ist eine Versiegelungsvorrichtung, mit welcher das erfindungsgemäße Verfahren verwirklicht wird, insgesamt kompakter aufgebaut, wodurch ein weiteres Mal ihre Neigung zu Schwingungen sinkt.
- Eine erfindungsgemäß arbeitende Versiegelungsvorrichtung mit dynamischem Mischer lässt sich preiswerter herstellen als eine herkömmliche Versiegelungsvorrichtung mit statischem Mischer.
- Versiegelungsmassen für Isolierglasscheiben sind mehr oder weniger dilatant, d. h., Ihre Viskosität steigt mit zunehmendem Druck, welchem die Masse ausgesetzt ist. Da eine erfindungsgemäß arbeitende Versiegelungsvorrichtung mit weniger Druck auskommt als bekannte Versiegelungseinrichtungen für Isolierglasscheiben, haben die dilatanten Versiegelungsmassen in einer erfindungsgemäß arbeitenden Versiegelungsvorrichtung eine niedrigere Viskosität als in einer herkömmlichen Versiegelungsvorrichtung. Erfindungsgemäß lassen sie sich deshalb leichter verarbeiten. Das gilt schon für das am weitesten verbreitete Thiokol. Besonders ausgeprägt ist der Vorteil der Erfindung jedoch beim Verarbeiten von Zweikomponenten-Versiegelungsmassen auf der Basis eines Silikons, welche zu einem Silikonkautschuk abbinden; diese Versiegelungsmassen lassen sich auf einer herkömmlichen Versiegelungsvorrichtung, die mit einem statischen Mischer ausgerüstet ist, allenfalls dann noch verarbeiten, wenn an der Düse nur verhältnismäßig geringe Durchsätze der pastösen Versiegelungsmasse gefordert sind, wie es bei Isolierglasscheiben der Fall ist, in denen der Abstand zwischen den Glastafeln nicht mehr als 10 mm beträgt. Da die Wärmedämmung einer Isolierglasscheibe jedoch umso besser wird, je größer der Abstand der Glastafeln in der Isolierglasscheibe voneinander ist, werden heute weit überwiegend Isolierglasscheiben gefertigt, bei denen der Abstand zwischen den Glastafeln 15 mm bis 25 mm beträgt. Das war, wenn als Versiegelungsmasse ein zu einem Silikonkautschuk abbindendes Silikon verwendet werden sollte, mit herkömmlichen Versiegelungsvorrichtungen nur dann zu schaffen, wenn ein Einbrechen der Versiegelungsgeschwindigkeit in Kauf genommen wurde, d. h., die erforderliche Senkung des Drucks in der Versiegelungsvorrichtung zog eine entsprechende Verringerung des Durchsatzes und damit einhergehend eine Verringerung der Versiegelungsgeschwindigkeit nach sich, die ihrerseits eine Verlängerung der Taktzeit der Isolierglasfertigungslinie nach sich zog. Erfindungsgemäß ist es jedoch möglich, das Silikon mit so großen Durchsätzen zu verarbeiten, wie es für Isolierglasscheiben mit großem Abstand zwischen den Glastafeln nötig ist, um die kurzen Taktzeiten moderner Isolierglasfertigungslinien voll ausnutzen zu können. Die vorliegende Erfindung eignet sich deshalb nicht nur zur Verwendung von Thiokol als Versiegelungsmasse, sondern auch zur Verwendung von Polyurethan und ganz besonders von zu Silikonkautschuk abbindendem Silikon als Zweikomponenten-Versiegelungsmasse.
- Unerwartet hat sich gezeigt, dass in der erfindungsgemäßen Kombination die Zahnradpumpen eine lange Lebensdauer haben, obwohl sie pastöse Massen verarbeiten, welche abrasive Füllstoffe enthalten.
- Die erfindungsgemäße Kombination ermöglicht ein unterbrechungsfreies Auspressen der pastösen Masse aus der Düse, solange der Vorrat im Vorratsbehälter reicht, welcher typisch ein 200 Liter Fass ist. Die Möglichkeit, die pastöse Masse unterbrechungsfrei zu dosieren, wird nicht durch das Fassungsvermögen der Zwischenbehälter eingeschränkt. Die Zwischenbehälter können deshalb klein und leicht sein.
- Der Bereich der Durchsätze an pastöser Masse ist bei einer nach dem erfindungsgemäßen Verfahren arbeitenden Vorrichtung wesentlich größer als im Stand der Technik. Durchsätze von 0,1 Liter pro Minute bis 10 Liter pro Minute konnten in ein-und-derselben Vorrichtung bereits verwirklicht werden.

Das erfindungsgemäße Verfahren lässt sich rationell durchführen und vielseitig für das Versiegeln von Isolierglasscheiben anwenden. Der erzielte Fortschritt ist verblüffend.

Die erfindungsgemäße Vorrichtung hat zum Zubereiten einer pastösen Masse aus wenigstens zwei Bestandteilen, die nach einem Vermischen miteinander abbinden, und zum Einspritzen eines Stranges aus der pastösen Masse in den Zwischenraum zwischen zwei Glastafeln einer Isolierglasscheibe Mittel zum Fördern der Bestandteile aus Vorratsbehältern in gesonderte Zwischenspeicher und weiter durch einen Mischer, welcher als dynamischer Mischer ausgebildet ist, zu einer Düse, welche mit einer in den Zwischenraum zwischen den zwei Glastafeln der Isolierglasscheibe gerichteten Mündung an einem Rand der Isolierglasscheibe entlang bewegt werden kann. Dem Mischer werden die miteinander zu vermischenden Bestandteile der pastösen Masse durch Zahnradpumpen zugeführt, welche im Förderweg zwischen dem jeweiligen Zwischenspeicher und dem dynamischen Mischer angeordnet sind. Die oben genannten Vorteile der Erfindung treffen auf die erfindungsgemäße Vorrichtung ebenso zu wie auf das Verfahren.

Die pastöse Masse dient dazu, den Innenraum der Isolierglasscheibe gegen das Eindringen von Wasserdampf zu versiegeln und/oder einen dauerhaften und hinreichend festen Verbund zwischen den zwei Glastafeln herzustellen. Für einen hinreichend festen Verbund verwendet man eine abbindende Masse, welche aus wenigstens zwei Bestandteilen gebildet ist, die miteinander gemischt werden. Die durch das Mischen entstandene Masse ist zunächst pastös und bindet dann fortschreitend ab, wobei sie sich verfestigt. Abbindende Zweikomponenten-Dicht- und Klebemassen auf der Basis von Thiokol sind für das Versiegeln der Randfuge von Isolierglasscheiben besonders gebräuchlich; sie binden zu Polysulfiden ab.

Zweckmäßigerweise werden die Zahnradpumpen synchron angetrieben, um ein gleichbleibendes Mischungsverhältnis der Bestandteile der pastösen Masse sicherzustellen, Die Bestandteile der pastösen, abbindenden Masse werden den Zahnradpumpen mit einem Vordruck zugeführt. Mit dem Vordruck kann Einfluss auf die Förderleistung der Zahnradpumpe genommen werden. Vorzugsweise werden die Zahnradpumpen mit einem konstanten Vordruck beaufschlagt. Das hat den Vorteil, dass sich Druckschwankungen, die im Förderweg von den Vorratsbehältern zu den Zahnradpumpen auftreten, sich nicht auf die Förderleistung der Zahnradpumpen auswirken. Das ist für das Erzielen einer hohen Dosiergenauigkeit der Versiegelungsvorrichtung von Vorteil. Die Zahnradpumpen für die verschiedenen Bestandteile der pastösen Masse müssen nicht mit dem gleichen Vordruck beaufschlagt werden, werden aber vorzugsweise mit dem gleichen Vordruck beaufschlagt.

Ein geeigneter Vordruck für die Zahnradpumpen liegt zwischen 20 bar und 50 bar, insbesondere zwischen 25 bar und 45 bar. Besonders bevorzugt ist ein Vordruck von 30 bar bis 40 bar.

Vorzugsweise werden die Zahnradpumpen dadurch mit einem Vordruck beaufschlagt, dass die Zwischenspeicher mit einem Vordruck beaufschlagt werden. Jeder Zwischenspeicher steht in Verbindung mit der Eingangsseite einer der Zahnradpumpen. Werden die Zwischenspeicher mit einem Vordruck beaufschlagt, ist das eine besonders günstige Möglichkeit, Druckschwankungen im Leitungsweg zwischen den Vorratsbehältern und dem jeweiligen Zwischenbehälter auszugleichen.

Einen konstanten Vordruck auf der Eingangsseite der jeweiligen Zahnradpumpe erreicht man zweckmäßigerweise dadurch, dass man den Vordruck auf der Eingangsseite misst und den gemessenen Wert des Vordrucks mit dem Sollwert des Vordrucks vergleicht und den Vordruck der Zahnradpumpe dann auf den Sollwert regelt, indem man den Vordruck im Zwischenspeicher passend steuert.

Wenn man die Zwischenbehälter unter einen konstanten Vordruck setzt, hat das den weiteren Vorteil, dass man damit das Nachfüllen der Zwischenbehälter aus den ihnen zugeordneten Vorratsbehältern steuern kann. Solange ein Zwischenbehälter keinen Nachschub aus dem Vorratsbehälter erhält, nimmt sein Volumen ab. Der abnehmende Inhalt kann durch einen Füllstandssensor überwacht werden, der bei einem vorgegebenen minimalen Inhalt ein Signal zum Nachfüllen an eine Pumpe gibt, welche dem zugehörigen Vorratsbehälter zugeordnet ist und den fraglichen Bestandteil so lange nachfüllt, bis der Inhalt im Zwischenbehälter ein vorgegebenes Maximum erreicht hat, welches vom Füllstandssensor erfasst wird, der daraufhin den Nachfüllvorgang wieder stoppt.

Bei Anwendung des erfindungsgemäßen Verfahrens wird der Druckverlust, welchen die pastöse Masse zwischen dem Eingang (Druckseite) und dem Ausgang der Zahnradpumpe erleidet, minimiert. Am besten ist es, wenn überhaupt kein Druckverlust an der Zahnradpumpe auftritt. Um das zu erreichen, wird der Druckverlust vorzugsweise auf den Wert Null geregelt. Zu diesem Zweck kann man den Vordruck vor dem Eingang der Zahnradpumpe und den Druck am Ausgang der Zahnradpumpe messen und die Drehzahl der Zahnradpumpe so regeln, dass die Druckdifferenz (der Druckverlust) gegen Null tendiert. Ist der Vordruck größer als der Druck am Ausgang der Zahnradpumpe, dann wird die Drehzahl der Zahnradpumpe erhöht. Ist der Vordruck der Zahnradpumpe kleiner als der Druck am Ausgang der Zahnradpumpe, dann wird die Drehzahl erniedrigt. Der Vordruck wird vorzugsweise konstant gehalten.

Die Erfindung des Verfahrens hat den Vorteil, dass die Spaltverluste in der Zahnradpumpe und der Verschleiß an der Zahnradpumpe besonders klein sind. Ein weiterer Vorteil liegt darin, dass sich eine solche Arbeitsweise nicht nur für große Durchsätze, sondern besonders auch für kleine Durchsätze eignet, wie sie z. B. für das Versiegeln von Solarmodulen benötigt werden, in welchen Solarzellen zwischen zwei Glasscheiben angeordnet sind, welche an ihrem Rand miteinander dicht zu verbinden sind.

Die Zwischenspeicher sind vorzugsweise Kolben-Zylinder-Einheiten, deren Kolben mit dem gewünschten Vordruck auf den Inhalt des Zylinders drückt. Zum Nachfüllen eines solchen Zwischenspeichers wird der betreffende Bestandteil aus einem Vorratsbehälter in den Zwischenspeicher gefördert, in welchen er mit einem Druck eintritt, der größer ist als der Vordruck, so dass der Kolben zurückweicht. Spätestens wenn der Kolben in seiner zurückgezogenen Endstellung anschlägt, wird der Nachfüllvorgang gestoppt. Wenn der Bestandteil mittels einer Zahnradpumpe aus dem Zylinder abgezogen wird, wird der Kolben durch den Druck, der auf ihm lastet, wieder vorgeschoben. Bevor er seine vordere Endstellung erreicht, was durch einen Sensor überwacht werden kann, wird der nächste Nachfüllvorgang gestartet. Der Kolben ist vorzugsweise ein Tauchkolben (Plunger).

Eine andere vorteilhafte Ausführungsform eines Zwischenspeichers ist ein Blasenspeicher. Ein Blasenspeicher besteht aus einem Gehäuse und einer Speicherblase, welche z. B. mit einem Luft-Kompressor verbunden ist, welcher den Druck in der Speicherblase konstant hält. Der Raum im Gehäuse außerhalb der Speicherblase kann dann mit dem pastösen Bestandteil gefüllt werden, welchen die Zahnradpumpe zum Mischer pumpen soll. Durch Veränderung des Volumens der Speicherblase bei konstantem Vordruck kann das Volumen des pastösen Bestandteils im Blasenspeicher variieren. Der Blasenspeicher kann auch als Membranspeicher ausgebildet sein. Bei einem Membranspeicher erfolgt die Trennung zwischen der Druckluft und der pastösen Masse nicht durch eine Blase oder einen Ballon, sondern durch eine Membran, welche das Gehäuse in zwei Kammern unterteilt.

Der Druck im jeweiligen Zwischenspeicher kann durch einen Regelkreis gesteuert werden, in welchem der zwischen dem Zwischenspeicher und der ihm zugeordneten Zahnradpumpe herrschenden Vordruck mit einem gegebenen Sollvordruck vergleichen und in Abhängigkeit von der Abweichung des Ist-Wertes vom Soll-Wert den Druck im jeweiligen Zwischenspeicher gesteuert wird.

Vorzugsweise hat der dynamische Mischer ein zylindrisches oder kegelstumpfförmiges Mischrohr, in welchem als Mischwerkzeug eine antreibbare Mischerwelle angeordnet ist, welche mit von der Mischerwelle abstehenden Mischelementen versehen ist. Die Mischelemente stehen vorzugsweise radial von der Mischerwelle ab und reichen bis dicht an die innen liegende Umfangswand des Mischrohres heran, so dass der gesamte lichte Querschnitt des Mischrohres von den Mischelementen erreicht wird und sich die zu vermischenden Materialien im Mischerrohr nicht festsetzen und abbinden können.

Die Mischelemente können unregelmäßig um die Mischerwelle herum angeordnet sein, sie können auch in mehreren kreisförmigen Anordnungen hintereinander auf der Mischerwelle angeordnet sein. Besonders bevorzugt ist es, wenn die Mischelemente wendelförmig um die Mischerwelle herum angeordnet sind, denn damit lässt sich am besten sicherstellen, dass alle Bereiche der innen liegenden Oberfläche des Mischrohrs von den Mischelementen überstrichen werden.

Die Mischelemente können unterschiedliche Gestalt haben: Es kann sich um Stäbe handeln, die im Querschnitt rund oder eckig ausgebildet sind. Es kann sich um Flügel oder um Bügel handeln. Vorteilhaft sind auch schaufelartig ausgebildete Mischelemente. Besonders sie können so ausgebildet sein, dass sie in Förderrichtung weisende Flächen haben, welche unter einem von 90° verschiedenen Winkel zur Längsachse der Mischerwelle angeordnet sind, so dass sie bei angetriebener Mischerwelle einen Vortrieb der pastösen Masse bewirken. Auf diese Weise kann der Druckverlust, den das Material im dynamischen Mischer erleidet, stark reduziert oder zum Verschwinden gebracht werden. Es ist sogar möglich, einen auf dem Weg vom Speicher zum dynamischen Mischer erlittenen Druckverlust wieder auszugleichen.

Besonders bevorzugt ist es, Mischelemente, die einen Vortrieb erzeugen können, mit anderen Mischelementen, die keinen Vortrieb erzeugen, aber eine größere Mischwirkung haben, zu kombinieren.

Als dynamischer Mischer kommt auch ein Mischrohr infrage, in welchem eine oder zwei Schnecken antreibbar angeordnet sind. Der radial außen liegende Rand der Schnecke erstreckt sich vorzugsweise bis an die innen liegende Umfangswand des Mischrohrs erstreckt.

Bei der erfindungsgemäßen Vorrichtung sind der Strömungsquerschnitt des Mischers und seine Antriebsleistung zweckmäßigerweise für einen Durchsatz der pastösen Masse von 0,1 Liter pro Minute bis zu 6 Liter pro Minute, insbesondere bis zu 10 Liter pro Minute ausgelegt. Letzteres macht die Vorrichtung besonders geeignet für das rasche Versiegeln von Isolierglasscheiben mit großem Abstand zwischen den Glasplatten.

Die Erfindung eignet sich besonders für zweikomponentige Dicht- und Klebemassen wie die in der Isolierglasfertigung bekannten Polysulfide (Thiokol), welche aus einem Hauptbestandteil und einem Zusatzbestandteil bestehen, die auf dem Weg zur Düse miteinander im Verhältnis von ca. 9 zu 1 zu einer zweikomponentigen pastösen Masse gemischt werden, die danach alsbald fortschreitend abbindet. Die Erfindung eignet sich außerdem besonders für zweikomponentige abbindende Massen auf der Basis von Polyurethan und Silikon. Erst durch die vorliegender Erfindung wurde es ermöglicht, Isolierglasscheiben mit mehr als 15 mm Luftzwischenraum mit einer Versiegelungsmasse auf der Grundlage eines zweikomponentigen Silikons zu versiegeln.

Beim Versiegeln einer Isolierglasscheibe wird in die Randfuge der Isolierglasscheibe, welche durch zwei Glastafeln und die Außenseite eines die Glastafeln verbindenden Abstandhalters begrenzt ist, die abbindende Masse in der Weise gespritzt, dass sie sich entweder als einheitlicher Strang von der einen Glastafel bis zur gegenüberliegenden Glastafel erstreckt oder - bei hinreichend druck- und zugfesten Abstandhaltern - nur in die Kehlen zwischen der Außenseite des Abstandhalters und den beiden Glastafeln eingefüllt ist. Im zuletzt genannten Fall befinden sich in der Randfuge zwei getrennte Stränge der Versiegelungsmasse nebeneinander. Zwei solche Stränge können mit einer Düse erzeugt werden, welche zwei nebeneinander liegende Mündungen hat.

Die Düse kann eine oder mehr als eine Mündung haben. Das Arbeiten mit nur einer Mündung kommt infrage, wenn ein einheitlicher Strang aus der pastösen Masse gebildet werden soll. Eine Düse mit zwei Mündungen kommt nicht nur infrage, wenn - wie erwähnt - zwei nebeneinander liegende Stränge gebildet werden sollen, von denen der eine den Abstandhalter mit der einen Glastafel und der andere den Abstandhalter mit der anderen Glastafel verbindet. Eine Düse mit zwei Mündungen kommt auch dann infrage, wenn ein zweischichtiger Verbundstrang aus zwei verschiedenen pastösen Massen gebildet werden soll.

Die Erfindung ermöglicht derart kompakte Versiegelungsvorrichtungen, dass einer Düse Speicher nicht nur für die Bestandteile einer einzigen Versiegelungsmasse wie z. B. Thiokol auf einem gemeinsamen bewegten Träger zugeordnet werden können, sondern eine größere Anzahl von Speichern für die Bestandteile von unterschiedlichen Versiegelungsmassen, z. B. für Thiokol und Polyurethan oder für Thikol und Silikon oder für alle drei Versiegelungsmassen. Die Versiegelungsvorrichtung erreicht selbst in einem solchen Fall noch nicht das Gewicht einer herkömmlichen Versiegelungsvorrichtung für nur eine Versiegelungsmasse. Durch ein oder mehrere Ventile, insbesondere durch ein Wegeventil, lässt sich eine solche Versiegelungsvorrichtung bequem, zeitsparend und kostensparend von der Verarbeitung einer Versiegelungsmasse auf die Verarbeitung einer anderen Versiegelungsmasse umschalten, wenn nötig unter Wechsel auf einen anderen dynamischen Mischer und auf eine andere Düse.

Weitere Merkmale und Vorteile der Erfindung ergeben sich aus der beigefügten Beschreibung von Ausführungsbeispielen der Erfindung, welche in den beigefügten Zeichnungen dargestellt sind. In den Ausführungsbeispielen sind gleiche oder einander entsprechende Teile mit übereinstimmenden Bezugszahlen bezeichnet.
- Figur 1: zeigt eine schematische Darstellung einer Vorrichtung zum Einspritzen einer pastösen Masse in den Zwischenraum zwischen zwei Glastafeln einer Isolierglasscheibe, und
- Figur 2: zeigt einen Längsschnitt durch einen dynamischen Mischer.

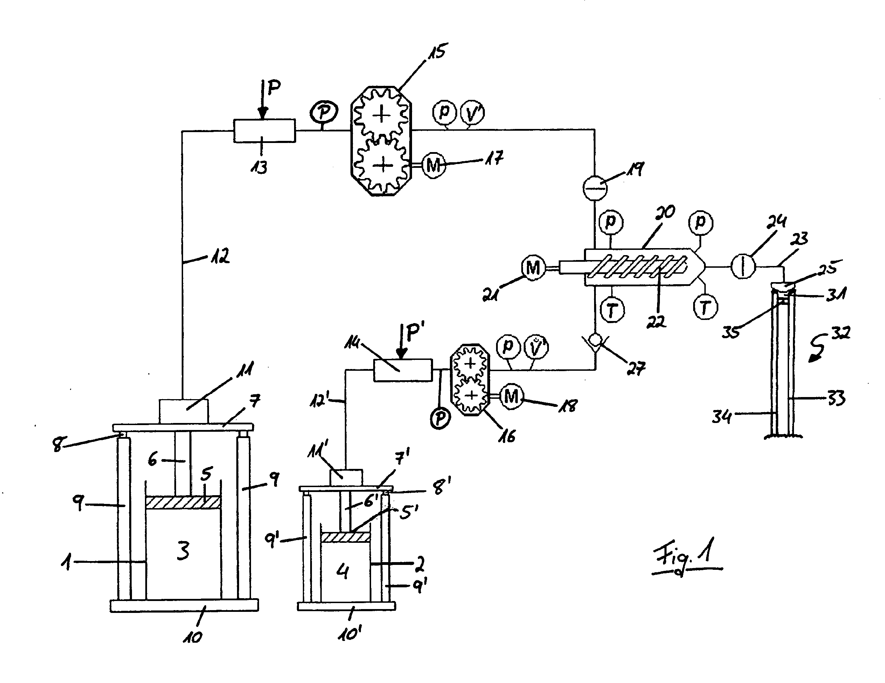

Figur 1 zeigt ein Gebinde 1 für einen ersten Bestandteil 3 einer pastösen Masse und ein Gebinde 2 für einen zweiten Bestandteil 4 der pastösen Masse. Die beiden Gebinde sind z. B. Fässer, deren Deckel abgenommen sind. Auf dem ersten Bestandteil 3 im Gebinde 1 liegt eine Folgeplatte 5. Von der Folgeplatte 5 führt eine Stange 6 senkrecht nach oben zu einer Traverse 7, welche nicht nur die Stange 6, sondern auch zwei Kolbenstangen 8 verbindet, welche zu zwei hydraulischen Zylindern 9 gehören, die auf einer Bodenplatte 10 verankert sind, auf welcher das Gebinde 1 steht. Durch Einziehen der Kolbenstangen 8 in die hydraulischen Zylinder 9 drückt die Traverse 7 die Folgeplatte 5 auf den im Gebinde 1 befindlichen Vorrat des Bestandteils 3 der pastösen Masse. Dadurch wird der Bestandteil 3 durch eine Öffnung in der Folgeplatte 5 in eine oberhalb der Folgeplatte 5 befindliche Pumpe 11 gedrückt, die den Bestandteil 3 in eine Leitung 12 fördert.

Der zweite Bestandteil 4 der pastösen Masse befindet sich in dem zweiten Gebinde 2 und wird aus diesem auf gleiche Weise herausgefördert, wie der erste Bestandteil 3 aus dem ersten Gebinde 1. Die dafür benutzten Einrichtungen sind deshalb mit denselben, mit einem Strich versehenen Bezugszahlen bezeichnet.

Die Fasspumpe 11 pumpt den darin enthaltenen Bestandteil, bei dem es sich in diesem Beispiel um die "Binderkomponente" der herzustellenden zweikomponentigen Versiegelungsmasse handelt, in einen Zwischenspeicher 13, welcher unter einem Vordruck P steht und mit der Eingangsseite einer Zahnradpumpe 15 verbunden ist, welche durch einen Elektromotor 17, vorzugsweise ein Gleichstrommotor, angetrieben ist.

Der zweite Bestandteil 4, bei welcher es sich im vorliegenden Beispiel um die "Härterkomponente" der herzustellenden zweikomponentigen Versiegelungsmasse handelt, wird von der Fasspumpe 11' durch die Leitung 12' in den Zwischenspeicher 14 gepumpt, welcher unter einem Vordruck P' steht und mit der Eingangsseite einer zweiten Zahnradpumpe 16 verbunden ist, welche durch einen Elektromotor 18 angetrieben wird. Die beiden Motoren 17 und 18 sind miteinander synchronisiert.

Die Zahnradpumpe 15 fördert den Bestandteil 3 durch eine Leitung, in welcher ein Drehschieber 19 angeordnet ist, in einen dynamischen Mischer 20. Die andere Zahnradpumpe 18 fördert den Bestandteil 4 durch eine Leitung, in welcher ein Rückschlagventil 27 liegt, ebenfalls in den dynamischen Mischer 20, welcher durch einen Elektromotor 21 angetrieben ist. Der dynamische Mischer 20 ist schematisch dargestellt und besteht im wesentlichen aus einem Rohr, welches an seinem einen Ende konisch zuläuft. In dem Rohr ist als Mischelement eine Schnecke 22 angeordnet, welche durch den Elektromotor 21 angetrieben wird. Der dynamische Mischer 20 mündet in eine Leitung 23, welche zu einer Düse 25 führt. Zwischen dem dynamischen Mischer 20 und der Düse 25 liegt ein Drehschieber 24, mit welchem die Zufuhr der durch das Mischen entstandenen zweikomponentigen Versiegelungsmasse zur Düse 25 unterbrochen werden kann.

Für Überwachungsaufgaben und Steuerungsaufgaben können in den Förderwegen vor und nach den Zahnradpumpen 15 und 17 sowie am Eingang und am Ausgang des dynamischen Mischers 20 Sensoren vorgesehen sein, die den Druck P und den Volumenstrom V' messen. Temperatursensoren T können die Temperatur im dynamischen Mischer 20 und am Ausgang des dynamischen Mischers 20 messen. Insbesondere kann der Druck P vor und hinter der Zahnradpumpe 15 bzw. 16 gemessen, daraus die Differenz gebildet und durch Einstellen der Drehzahl des Motors 17 bzw. 18 auf den Sollwert Null geregelt werden. Der Vordruck P wird z. B. mittels eines Tauchkolbens im Zwischenspeicher 13 bzw. 14 eingestellt und am besten konstant gehalten.

Die Düse 25 liegt am Rand einer Isolierglasscheibe 32 an, welche aus zwei Glastafeln 33 und 34 mit einem dazwischen gefügten Abstandhalter 35 besteht. Entweder wird die Düse 25 am Rand der Isolierglasscheibe 32 entlang bewegt oder die Isolierglasscheibe 32 wird mit ihrem Rand an der Düse 25 entlang bewegt, um die Randfuge 31 zu versiegeln, die auf der Außenseite des Abstandhalters 35 zwischen den beiden Glastafeln 33 und 34 gebildet ist.

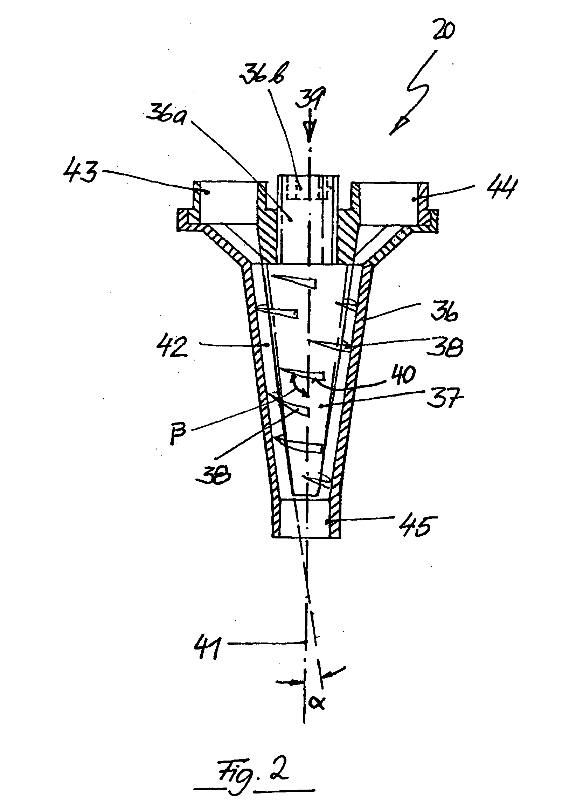

Figur 2 zeigt ein Beispiel eines dynamischen Mischers 20, welcher ein konisches Mischrohr 36 hat, in welchem eine konische Mischerwelle 37 gelagert ist, welche in einem aus dem Mischrohr 36 vorstehenden Wellenzapfen 36a ein Sackloch 36b mit Sechskantquerschnitt hat, in welches formschlüssig eine treibende Welle eines Motors 21 (siehe Figur 1) eingreifen kann.

Die Mischerwelle 37 hat den gleichen Konuswinkel α wie das Mischrohr 36, sodass zwischen beiden ein Ringspalt 42 von gleich bleibender Breite besteht.

Die Mischerwelle 37 trägt als Mischelemente 38 radial abstehende Flügel, die bis unmittelbar an die innere Oberfläche des Mischrohrs 36 reichen. Die Mischelemente 38 haben eine in Förderrichtung 39 weisende Fläche 40, welche um einen von 90° verschiedenen Winkel β zur Längsachse 41 so angestellt sind, dass die sich mit der Mischerwelle 37 drehenden Mischelemente 38 einen Vortrieb der im Mischer 20 befindlichen Masse bewirken.

Zwei zu vermischende Bestandteile einer abbindenden Versiegelungsmasse werden durch zwei Einlassstutzen 43 und 44 zugeführt. Die Mischung verlässt den Mischer 20 durch einen Auslass 45.

**Bezugszahlenliste:**

| | | | |
|---|---|---|---|
| 1. | Gebinde, Vorratsbehälter | 29 | --- |
| 2. | Gebinde, Vorratsbehälter | 30 | --- |
| 3. | Bestandteil | 31 | Randfuge |
| 4. | Bestandteil | 32 | Isolierglasscheibe |
| 5, 5' | Folgeplatte | 33. | Glastafel |
| 6, 6' | Stange | 34. | Glastafel |
| 7, 7' | Traverse | 35. | Abstandhalter |
| 8, 8' | Kolbenstange | 36. | Mischrohr |
| 9, 9' | Zylinder | 36a. | Wellenzapfen |
| 10, 10' | Bodenplatte | 36b. | Sackloch |
| 11, 11' | Pumpe, Fasspumpe | 37. | Mischerwelle |
| 12, 12' | Leitung | 38. | Mischelemente |
| 13 | Zwischenspeicher | 39. | Förderrichtung |
| 14 | Zwischenspeicher | 40. | Fläche von 38 |
| 15 | Zahnradpumpe | 41. | Längsachse |
| 16 | Zahnradpumpe | 42. | Ringspalt |
| 17 | Antrieb, Elektromotor | 43. | Einlassstutzen |
| 18 | Antrieb, Elektromotor | 44. | Einlassstutzen |
| 19. | Drehschieber | 45. | Auslass |
| 20. | dynamischer Mischer | | |
| 21 | Elektromotor | α. | Winkel |
| 22. | Schnecke | β. | Winkel |
| 23. | Leitung | | |
| 24. | Drehschieber | | |
| 25. | Düse | | |
| 26 | --- | | |
| 27 | Rückschlagventil | | |
| 28 | --- | | |

## Patentansprüche

1. Verfahren zum Zubereiten einer aus wenigstens zwei Bestandteilen (3, 4) bestehenden pastösen Masse, welche nach dem Vermischen der anfänglich in getrennten Vorratsbehältern (1, 2) vorliegenden Bestandteile (3, 4) abbindet, und zum Einspritzen der abbindenden pastösen Masse in einen Raum durch Fördern der wenigstens zwei Bestandteile (3, 4) aus den Vorratsbehältern (1, 2) in gesonderte Zwischenspeicher (13, 14), aus welchen sie in einen Mischer (20) gefördert werden, in welchem die Bestandteile (3, 4) während ihres Durchlaufs durch den Mischer (20) miteinander vermischt werden und die den Mischer (20) verlassende abbindende, pastöse Masse mittels einer Düse (25) mit wenigstens einer Mündung eingespritzt wird, wobei
die wenigstens zwei Bestandteile (3, 4) der pastösen Masse mit Zahnradpumpen (15, 16), denen die Bestandteile (3, 4) der pastösen, abbindenden Masse mit einem Vordruck zugeführt werden, aus den Zwischenspeichern (13, 14) in den Mischer (20) gepumpt werden, in welchem sie mittels motorisch angetriebener Mischelemente (38) dynamisch miteinander vermischt werden,
**dadurch gekennzeichnet, dass** die pastöse Masse mit der Düse (25) in einen Zwischenraum zwischen zwei Glastafeln (33, 34) einer Isolierglasscheibe (32) eingespritzt wird, während die Düse (25) am Rand wenigstens einer der beiden Glastafeln (33, 34) entlang bewegt wird und mit ihrer wenigstens einen Mündung in den Zwischenraum zwischen den Glastafeln (33, 34) gerichtet ist, und dass der Vordruck der Zahnradpumpen (15, 16) und der Druck am Ausgang der Zahnradpumpen (15, 16) so aufeinander abgestimmt werden, dass die Druckdifferenz minimal ist.

2. Verfahren nach Anspruch 1, **dadurch gekennzeichnet, dass** die Zahnradpumpen (15, 16) mit dem gleichen Vordruck beaufschlagt werden.

3. Verfahren nach Anspruch 2, **dadurch gekennzeichnet, dass** die Zahnradpumpen (15, 16) mit einem Vordruck von 20 bis 50 bar beaufschlagt werden.

4. Verfahren nach einem der Ansprüche 1 bis 3, **dadurch gekennzeichnet, dass** die Zahnradpumpen (15, 16) dadurch mit einem Vordruck beaufschlagt werden, dass die Zwischenspeicher (13, 14) mit einem Vordruck beaufschlagt werden.

5. Verfahren nach Anspruch 4, **dadurch gekennzeichnet, dass** der Vordruck auf der Eingangsseite der jeweiligen Zahnradpumpe (15, 16) gemessen und auf seinen Sollwert geregelt wird.

6. Verfahren nach einem der Ansprüche 1 bis 5, **dadurch gekennzeichnet, dass** der Vordruck der Zahnradpumpen (15, 16) und der Druck am Ausgang der Zahnradpumpen (15, 16) so aufeinander abgestimmt werden, dass die Druckdifferenz Null ist.

7. Verfahren nach einem der vorstehenden Ansprüche, **gekennzeichnet durch** die Verwendung einer pastösen, abbindenden Masse, von welcher wenigstens ein Bestandteil (3, 4) einen mineralischen Füllstoff enthält, insbesondere ein Gesteinsmehl und/oder Kalkpulver.

8. Verfahren nach einem der vorstehenden Ansprüche, **dadurch gekennzeichnet, dass** als abbindende Masse ein Silikon zubereitet wird.

9. Vorrichtung zum Zubereiten einer pastösen Masse aus wenigstens zwei Bestandteilen (3, 4), die nach einem Vermischen miteinander abbinden, und zum Einspritzen eines Stranges aus der pastösen Masse in einen Raum mit Mitteln (11, 11', 15, 16) zum Fördern der Bestandteile (3, 4) aus Vorratsbehältern (1, 2) in gesonderte Zwischenspeicher (13, 14) und weiter durch einen dynamischen Mischer (20) zu einer beweglichen Düse (25), wobei im Förderweg zwischen dem jeweiligen Zwischenspeicher (13, 14) und dem dynamischen Mischer (20) Zahnradpumpen (15, 16) angeordnet sind, welchen die miteinander zu vermischenden Bestandteile (3, 4) unter einem Vordruck zugeführt werden, wozu vor jeder Zahnradpumpe (15, 16) ein Druckerzeuger vorgesehen ist, welcher den der Zahnradpumpe (15, 16) zugeführten Bestandteil (3, 4) der pastösen Masse auf ihrer Eingangsseite mit dem Vordruck beaufschlagt,
**dadurch gekennzeichnet, dass** der Raum ein Zwischenraum zwischen zwei Glastafeln (33, 34) einer Isolierglasscheibe (32) ist, in welchen die Mündung der Düse (25) gerichtet ist, während sie am Rand der Isolierglasscheibe (32) entlang bewegt wird, und dass die Drehzahl der Zahnradpumpen (15, 16) so einstellbar ist, dass die Druckdifferenz über den Zahnradpumpen (15, 16) minimal ist.

10. Vorrichtung nach Anspruch 9, **dadurch gekennzeichnet, dass** ein Regler vorgesehen ist, welcher den Druckverlust über den Zahnradpumpen (15, 16) auf einen minimalen Wert, insbesondere auf Null regelt.

11. Vorrichtung nach Anspruch 9 oder 10, **dadurch gekennzeichnet, dass** die Druckerzeuger den jeweiligen Zwischenspeichern (13, 14) zugeordnet sind und den Vordruck für die Zahnradpumpen (15, 16) dadurch erzeugen, dass sie Druck auf den Inhalt des jeweiligen Zwischenspeichers (13, 14) ausüben.

12. Vorrichtung nach einem der Ansprüche 9 bis 11, **dadurch gekennzeichnet, dass** die Zwischenspeicher (13 , 14) Kolben-Zylinder-Einheiten sind.

13. Vorrichtung nach Anspruch 11 oder 12, **dadurch gekennzeichnet, dass** zur Überwachung des Vordrucks der Zahnradpumpen (15, 16) zwischen diesen und den ihnen jeweils zugeordneten Zwischenspeichern (13, 14) ein Drucksensor (P) vorgesehen ist, welcher den Vordruck misst und Bestandteil eines Regelkreises ist, welcher den gemessenen Vordruck als Ist-Wert mit einem vorgegebenen Soll-Vordruck vergleicht und in Abhängigkeit von der Abweichung des Ist-Wertes vom Soll-Vordruck den Druck im jeweiligen Zwischenspeicher (13, 14) steuert.

14. Vorrichtung nach einem der Ansprüche 9 bis 13, **dadurch gekennzeichnet, dass** die Mischelemente (38) in Förderrichtung (39) weisende Flächen (40) haben, welche unter einem von 90° verschiedenen Winkel (β) zur Längsachse (41) der Mischerwelle (37) so angeordnet sind, dass sie bei angetriebener Mischerwelle (37) einen Vortrieb der pastösen Masse bewirken.

15. Vorrichtung nach einem der Ansprüche 9 bis 14, **dadurch gekennzeichnet, dass** sich die Mischelemente (38) bis an die innen liegende Umfangswand des Mischrohrs (36) erstrecken.

16. Vorrichtung nach einem der Ansprüche 9 bis 15, **dadurch gekennzeichnet, dass** der Strömungsquerschnitt des Mischers (20) und seine Antriebsleistung für einen Durchsatz der pastösen Masse von mindestens 0,1 l/min ausgelegt sind.

17. Vorrichtung nach einem der Ansprüche 9 bis 16, **dadurch gekennzeichnet, dass** der Strömungsquerschnitt des Mischers (20) und seine Antriebsleistung für einen Durchsatz der pastösen Masse von bis zu 6 l/min ausgelegt sind.

## Claims

1. A method for preparing a paste-like compound that consists of at least two constituents (3, 4) and sets once the constituents (3, 4), which are initially present in separate storage containers (1, 2), have been mixed, and for injecting the setting, paste-like compound into a space by delivering the at least two constituents (3, 4) from the storage containers (1, 2) into separate intermediate storage units (13, 14), from which the constituents are delivered into a mixer (20), in which the constituents (3, 4) are mixed with one another while passing through the mixer (20) and the setting, paste-like compound leaving the mixer (20) is injected by means of a nozzle (25) comprising at least one outlet, wherein the at least two constituents (3, 4) of the paste-like compound are pumped using gear pumps (15, 16), to which the constituents (3, 4) of the paste-like setting compound are fed at an inlet pressure pressure, from the intermediate storage units (13, 14) into the mixer (20), in which the constituents are dynamically mixed with one another by motor-driven mixing elements (38), **characterised in that** the paste-like compound is injected via the nozzle (25) into an intermediate space between two glass panels (33, 34) of an insulating glass pane (32) whilst the nozzle (25) is moved along the edge of at least one of the two glass panels (33, 34) and is directed with its at least one outlet into the intermediate space between the glass panels (33, 34), and **in that** the inlet pressure of the gear pumps (15, 16) and the pressure at the output of the gear pumps (15, 16) are matched with one another such that the pressure difference is minimal.

2. The method according to Claim 1, **characterised in that** the same inlet pressure is applied to the gear pumps (15, 16) .

3. The method according to Claim 2, **characterised in that** an inlet pressure from 20 to 50 bar is applied to the gear pumps (15, 16).

4. The method according to any of Claims 1 to 3, **characterised in that** an inlet pressure is applied to the gear pumps (15, 16) as a result of the fact that an inlet pressure is applied to the intermediate storage units (13, 14) .

5. The method according to claim 4, **characterised in that** the inlet pressure is measured on the input side of the respective gear pump (15, 16) and is regulated to its target value.

6. The method according to any of Claims 1 to 5, **characterised in that** the inlet pressure of the gear pumps (15, 16) and the pressure at the output of the gear pumps (15, 16) are matched to one another such that the pressure difference is zero.

7. The method according to any of the preceding claims, **characterised by** the use of a paste-like setting compound, at least one constituent (3, 4) of which contains a mineral filler, in particular a stone dust and/or lime power.

8. The method according to any of the preceding claim, **characterised in that** a silicone is prepared as the setting compound.

9. A device for preparing a paste-like compound consisting of at least two constituents (3, 4), which set after having been mixed with one another, and for injecting a strand of the paste-like compound into a space, comprising means (11, 11', 15, 16) for delivering the constituents (3, 4) from storage containers (1, 2) into separate intermediate storage units (13, 14) and further through a dynamic mixer (20) to a movable nozzle (25), wherein gear pumps (15, 16) are arranged in the delivery path between the respective intermediate storage unit (13, 14) and the dynamic mixer (20), the constituents (3, 4) to be mixed with one another being fed at an inlet pressure to said gear pumps, for which purpose a pressure generator is provided upstream of each gear pump (15, 16) and, on the input side of the gear pump, applies the inlet pressure to the constituent (3, 4) of the paste-like compound supplied to the gear pump,
**characterised in that** the space is an intermediate space between two gloss panels (33, 34) of an insulating glass pane (32), into which the outlet of the nozzle (25) is directed whilst it is moved along the edge of the insulating glass pane (32), and **in that** the rotational speed of the gear pumps (15, 16) can be set such that the pressure difference over the gear pumps (15, 16) is minimal.

10. The device according to Claim 9, **characterised in that** a controller is provided, which regulates the pressure loss over the gear pumps (15, 16) to a minimal value, in particular to zero.

11. The device according to Claim 9 or 10, **characterised in that** the pressure generators are associated with the respective intermediate storage units (13, 14) and generate the inlet pressure for the gear pumps (15, 16) by exerting pressure onto the content of the respective intermediate storage unit (13, 14).

12. The device according to any of Claims 9 to 11, **characterised in that** the intermediate storage units (13, 14) are piston-cylinder units.

13. The device according to Claim 11 or 12, **characterised in that** a pressure sensor (P) for monitoring the inlet pressure of the gear pumps (15, 16) is provided between said gear pumps and their respective intermediate storage units (13, 14) and measures the inlet pressure and is a component of a control loop, which compares the measured inlet pressure as an actual value with a predetermined target inlet pressure and controls the pressure in the respective intermediate storage unit (13, 14) in accordance with the deviation of the actual value from the target inlet pressure.

14. The device according to any of Claims 9 to 13, **characterised in that** the mixing elements (38) have surfaces (40) which point in the delivery direction (39) and which are arranged at an angle (β) to the longitudinal axis (41) of the mixing shaft (37), said angle differing from 90°, such that the mixing elements advance the paste-like compound when the mixing shaft (37) is driven.

15. The device according to any of Claims 9 to 14, **characterised in that** the mixing elements (38) extend as far as the inner peripheral wall of the mixing tube (36).

16. The device according to any of Claims 9 to 15, **characterised in that** the flow cross-section of the mixer (20) and the drive power of the mixer are designed for a throughput of the paste-like compound of at least 0.1 l/min.

17. The device according to any of Claims 9 to 16, **characterised in that** the flow cross section of the mixer (20) and the drive power of the mixer are designed for a throughput of the paste-like compound of up to 6 l/min.

## Revendications

1. Procédé pour la préparation d'une masse pâteuse constituée d'au moins deux composants (3, 4), laquelle prend après le mélange des composants (3, 4) initialement contenus dans des récipients de stockage séparés (1, 2), et pour l'injection de la masse pâteuse de prise dans un espace
en transférant les au moins deux composants (3, 4) hors des récipients de stockage (1, 2) et dans des récipients intermédiaires séparés (13, 14), à partir desquels ils sont transférés dans un mélangeur (20), dans lequel les composants (3, 4) sont mélangés ensemble pendant leur passage à travers le mélangeur (20), et la masse pâteuse de prise quittant le mélangeur (20) est injectée au moyen d'une buse (25) avec au moins une embouchure, dans lequel les au moins deux composants (3, 4) de la masse pâteuse sont pompés à l'aide de pompes à engrenage (15, 16), vers lesquelles les composants (3, 4) de la masse pâteuse de prise sont alimentés avec une pression d'alimentation, hors des récipients intermédiaires (13, 14) et vers le mélangeur (20), dans lequel ils sont mélangés dynamiquement l'un avec l'autre au moyen d'éléments de mélange (38) entraînés de façon motorisée,
**caractérisé en ce que** la masse pâteuse est injectée à l'aide de la buse (25) dans un espace intermédiaire entre deux plaques de verre (33, 34) d'une vitre isolante (32), pendant que la buse (25) est déplacée le long du bord d'au moins l'une des deux plaques de verre (33, 34), tout en étant dirigée avec son au moins une embouchure dans l'espace intermédiaire entre les plaques de verre (33, 34), et **en ce que** la pression d'alimentation des pompes à engrenage (15, 16) et la pression à la sortie des pompes à engrenage (15, 16) sont accordées l'une avec l'autre de manière à obtenir une différence de pression minimale.

2. Procédé selon la revendication 1, **caractérisé en ce que** les pompes à engrenage (15, 16) sont soumises à la même pression d'alimentation.

3. Procédé selon la revendication 2, **caractérisé en ce que** les pompes à engrenage (15, 16) sont soumises à une pression d'alimentation de 20 à 50 bar.

4. Procédé selon l'une des revendications 1 à 3, **caractérisé en ce que** les pompes à engrenage (15, 16) sont soumises à une pression d'alimentation du fait que les récipients intermédiaires (13, 14) soient soumis à une pression d'alimentation.

5. Procédé selon la revendication 4, **caractérisé en ce que** la pression d'alimentation du côté entrée de chaque pompe à engrenage (15, 16) est mesurée et réglée à une valeur de consigne.

6. Procédé selon l'une des revendications 1 à 5, **caractérisé en ce que** la pression d'alimentation des pompes à engrenage (15, 16) et la pression à la sortie des pompes à engrenage (15, 16) sont accordées de telle façon l'une avec l'autre, que la différence de pression est égale à zéro.

7. Procédé selon l'une des revendications précédentes, **caractérisé par** l'utilisation d'une masse pâteuse de prise dans laquelle au moins un composant (3, 4) contient une matière de remplissage minérale, en particulier une poudre de roche et/ou une poudre de calcaire.

8. Procédé selon l'une des revendications précédentes, **caractérisé en ce qu'**une silicone est préparée comme masse de prise.

9. Dispositif pour la préparation d'une masse pâteuse à partir d'au moins deux composants (3, 4) prenant après avoir été mélangés l'un avec l'autre, et pour l'injection d'un boudin de masse pâteuse dans un espace
avec des moyens (11, 11', 15, 16) pour le transfert des composants (3, 4) hors de récipients de stockage (1, 2), vers des récipients intermédiaires séparés (13, 14) et plus loin à travers un mélangeur dynamique (20) vers une buse mobile (25), dans lequel des pompes à engrenage (15, 16) sont agencées sur le trajet de transfert, entre le récipient intermédiaire (13, 14) respectif et le mélangeur dynamique (20), vers lesquelles sont alimentés les composants (3, 4) à mélanger ensemble, avec une pression d'alimentation, un générateur de pression étant prévu à cet effet en amont de chaque pompe à engrenage (15, 16) pour soumettre les composants (3, 4) de la masse pâteuse alimentés vers la pompe à engrenage (15, 16) à une pression d'alimentation du côté de son entrée, **caractérisé en ce que** l'espace est un espace intermédiaire entre deux plaques de verre (33, 34) d'une vitre isolante (32), dans lequel est dirigée l'embouchure de la buse (25), pendant que celle-ci est déplacée le long du bord de la vitre isolante (32), et **en ce que** la vitesse de rotation des pompes à engrenage (15, 16) peut être réglée de manière à ce que la différence de pression à travers les pompes à engrenage (15, 16) soit minimale.

10. Dispositif selon la revendication 9, **caractérisé en ce qu'**il est prévu un dispositif de réglage permettant de régler la perte de pression à travers les pompes à engrenage (15, 16) à une valeur minimale, en particulier à zéro.

11. Dispositif selon la revendication 9 ou 10, **caractérisé en ce que** les générateurs de pression sont attribués aux récipients intermédiaires (13, 14) respectifs et produisent la pression d'alimentation pour les pompes à engrenage (15, 16) en exerçant une pression sur le contenu du récipient intermédiaire (13, 14) respectif.

12. Dispositif selon l'une des revendications 9 à 11, **caractérisé en ce que** les récipients intermédiaires (13, 14) sont des unités piston-cylindre.

13. Dispositif selon la revendication 11 ou 12, **caractérisé en ce que** pour la surveillance de la pression d'alimentation des pompes à engrenage (15, 16) entre celles-ci et les récipients intermédiaires (13, 14) respectivement attribués à celles-ci, il est prévu un capteur de pression (P) mesurant la pression et faisant partie du circuit de réglage, lequel compare la pression d'alimentation mesurée en tant que valeur réelle avec une pression d'alimentation de consigne prédéfinie, et commande la pression dans le récipient intermédiaire (13, 14) respectif en fonction de l'écart de la valeur réelle par rapport à la pression d'alimentation de consigne.

14. Dispositif selon l'une des revendications 9 à 13, **caractérisé en ce que** les éléments de mélange (38) possèdent des surfaces (40) orientées dans la direction de transport (39), lesquelles sont agencées sous un angle (β) variant de 90° par rapport à l'axe longitudinal (41) de l'arbre de mélangeur (37), de manière à faire avancer la masse pâteuse lorsque l'arbre de mélangeur (37) est entraîné.

15. Dispositif selon l'une des revendications 9 à 14, **caractérisé en ce que** les éléments de mélange (38) s'étendent jusqu'à la paroi circonférentielle intérieure du tuyau de mélange (36).

16. Dispositif selon l'une des revendications 9 à 15, **caractérisé en ce que** la section transversale d'écoulement du mélangeur (20) et sa puissance d'entraînement sont conçues pour un débit minimum de 0,1 l/min de la masse pâteuse.

17. Dispositif selon l'une des revendications 9 à 16, **caractérisé en ce que** la section transversale d'écoulement du mélangeur (20) et sa puissance d'entraînement sont conçues pour un débit de masse pâteuse allant jusqu'à 6 l/min.
